# EUROPEAN PATENT APPLICATION

(11) **EP 1 325 898 A1**
(43) Date of publication of application: **09.07.2003**
(21) Application number: 01965581.0
(22) Date of filing: 12.09.2001
(51) Int. Cl.: C04B 35/10, F28D 17/02, F28D 20/00, F23L 15/02

(54) **ALUMINA HONEYCOMB STRUCTURE, METHOD FOR MANUFACTURE OF THE SAME, AND HEAT-STORING HONEYCOMB STRUCTURE USING THE SAME**

(30) Priority: 26.09.2000 JP 2000291709; 26.09.2000 JP 2000291711
(71) Applicant: NGK INSULATORS, LTD., Nagoya-shi, Aichi-ken 467-8530 (JP); NKK CORPORATION, Tokyo 100-8202 (JP); NIPPON FURNACE KOGYO KABUSHIKI KAISHA, Yokohama-shi, Kanagawa 230-8666 (JP)
(72) Inventor: KASAI, Yoshiyuki, c/o NGK INSULATORS, LTD., Nagoya-shi, Aichi 467-8530 (JP); HARADA, Takashi, c/o NGK INSULATORS, LTD., Nagoya-shi, Aichi 467-8530 (JP); UMEHARA, Kazuhiko, c/o NGK INSULATORS, LTD., Nagoya-shi, Aichi 467-8530 (JP); MORI, Isao, c/o NKK Corporation, Tokyo 100-8202 (JP); NAGOSHI, Masayasu, c/o NKK CORPORATION, Tokyo 100-8202 (JP); TADA, Takeshi, c/o NIPPON FURNACE KOGYO K. LTD., Yokohama-shi, Kanagawa 230-8666 (JP)
(74) Representative: Paget, Hugh Charles Edward
(86) International application number: JP0107910
(87) International publication number: WO02026655

(57) **Abstract**

In an alumina honeycomb structural body according to a first aspect of the invention and another invention relating it, the alumina honeycomb structural body is constructed in such a manner that alumina is a main ingredient and an amount of impurities is limited to not greater than 2 weight %. Moreover, in an alumina honeycomb structural body according to a second aspect of the invention and another invention relating it, the alumina honeycomb structural body is constructed in such a manner that an amount of alumina as a main ingredient is limited to not less than 98 weight % ; an amount of Na containing compound is limited to 0.02 weight % -1.0 weight % of Na₂O when converting it into oxide; and remainder is impurities.

## Description

### Technical Field

The present invention relates to an alumina honeycomb structural body, wherein an exhaust gas and a gas to be heated are alternately passed through flow passages defined by through holes so as to recover a waste heat in the exhaust gas, a method of manufacturing the alumina honeycomb structural body, and a honeycomb regenerator utilizing the alumina honeycomb structural body. The present invention further relates to various heating furnace utilizing the honeycomb regenerator and a method of heating the heating furnace.

### Background Art

Recently, as key energy-saving measures of a general industrial heating furnace used for a melting and a heat processing of steel, aluminum or glass and so, it is known a heating method utilizing a regenerative burner, wherein a sensible heat of the exhaust gas after combustion is recovered as a pre-heated air having a high temperature.

In the heating method utilizing the regenerative burner mentioned above, the use of cordierite material having a small thermal expansion coefficient and an excellent thermal stability in a low temperature region and alumina material having a high heat resistance and a high corrosion resistance in a high temperature region is disclosed. For example, as disclosed in Japanese Patent Laid-Open Publication No. 11-30491, at least one pair of burners each installing the honeycomb regenerator, and, a fuel burning step and a combustion gas exhausting step are performed alternately. In this case, a sensible heat in the combustion gas is stored in the honeycomb regenerator when exhausting the combustion gas, and, an air for firing is pre-heated to a high temperature by the stored sensible heat when introducing the air for firing, thereby obtaining a high waste heat recovering efficiency. Therefore, it is possible to reduce a fuel cost and also reduce a discharging amount of carbon dioxide.

As the regenerator, generally use is made of media such as ball, pellet, and saddle. However, recently use is made of ceramic honeycomb structures having large heat conduction per unit volume, compact dimension and excellent heat performance.

The regenerative burner has a merit since an exhaust gas having a higher temperature is heat-exchanged. Therefore, it is more effective when it is used for an aluminum melting furnace or a steel heating furnace. However, in a field using the aluminum melting furnace or the steel heating furnace, that has an environment having strong corrosion atmosphere, there is a drawback that the alumina honeycomb having a normal composition is corroded. That is, in the field mentioned above, corrosion substances such as alkali metal elements, iron series elements and so on are existent in the exhaust gas for heat-exchanging. Moreover, in the honeycomb regenerator, when a temperature of the exhaust gas introduced therein becomes over 1000°C, deterioration and shortened service life appear due to a reaction with the alumina honeycomb structural body.
The deterioration and the shortened service life become remarkable in a temperature range over 1300°C. Particularly, in the steel heating furnace, a temperature in the heating furnace is high, and a temperature of the exhaust gas used for heat-exchanging is also high i.e. over 1300°C at a portion showing highest temperature. Moreover, scale corrosion substances from the heated steel are adhered to the alumina honeycomb structural body. Further, in the case that alkali components are included in the combustion gas, a deterioration of the alumina honeycomb structural body due to the reaction is promoted. As a means for preventing the deterioration of the alumina honeycomb structural body, a method is thinkable such that a cooling air is mixed in the exhaust gas introduced therein. However, this method has a problem such that energy efficiency becomes lower.

As an actual example, in by-product gasses generated at an integrated iron foundry such as blast furnace gas (BFG), coke oven gas (COG), LD converter gas (LDG) and so on, a small amount of alkali components is included. Therefore, in the steel heating furnace utilizing the by-product gasses as a fuel (generally utilizing M-gas generated by mixing these by-product gasses), a deterioration of the alumina honeycomb structural body appears remarkably at a temperature range over 1000°C, particularly at a high temperature range over 1300°C. The deterioration and damage of the alumina honeycomb structural body cause a decrease of waste heat recovering efficiency due to a decrease of heat performance of the honeycomb structure and material, and also cause an increase of running cost caused by an increase of honeycomb cost and exchanging operation cost.

### Disclosure of Invention

An object of the present invention is to eliminate the drawbacks mentioned above and to provide an alumina honeycomb structural body which can perform a heat-exchanging effectively under an atmosphere wherein metal dusts are flew in all direction and also under a corrosion atmosphere, a method of manufacturing the alumina honeycomb structural body, and a honeycomb regenerator utilizing the alumina honeycomb structural body. Another object of the present invention is to further provide various heating furnaces utilizing the honeycomb regenerator and a heating method of the honeycomb regenerator.

According to a first aspect of the invention of an alumina honeycomb structural body, the alumina honeycomb structural body comprises: alumina as a main ingredient and not greater than 2 weight % of impurities. Moreover, according to a first aspect of the invention of a method of manufacturing the alumina honeycomb structural body, the method comprises the step of: mixing 97 weight % - 70 weight % of α alumina, 3 weight % - 30 weight % of aluminum hydroxide, forming agents, and solvents to obtain a plastic substance; extruding the plastic substance to obtain an extruded honeycomb body; and firing the extruded honeycomb body to obtain an alumina honeycomb structural body having α alumina as a main crystal phase. Further, according to a first aspect of the invention of a honeycomb regenerator, the honeycomb regenerator comprises: at least one alumina honeycomb structural body mentioned above, wherein a heating gas and a gas to be heated are alternately passed therein so as to perform a heat-exchanging.

In the first aspect of the alumina honeycomb structural body and the first aspect of the honeycomb regenerator, since an amount of impurities is limited to not greater than 2 weight %, a scale of steel does not react with the impurities in the alumina honeycomb structural body so much and a life of the regenerator can be prolonged, even if the regenerator is used in the steel heating furnace. Moreover, in the first aspect of the method of manufacturing the alumina honeycomb structural body, since use is made of 97 weight % - 70 weight % of α alumina and 3 weight % - 30 weight % of aluminum hydroxide as raw materials, it is possible to obtain the alumina honeycomb structural body having an excellent formability while maintaining high purity. Since predetermined amount of aluminum hydroxide is used as raw materials, it is possible to decrease porosity even under a low temperature firing. Here, if an amount of α alumina exceeds 97 weight % and an amount of aluminum hydroxide is less than 3 weight %, it is difficult to obtain a formability increasing effect due to the aluminum hydroxide. Moreover, if an amount of α alumina is less than 70 weight % and an amount of aluminum hydroxide exceeds 30 weight %, a shrinkage of the alumina honeycomb structural body during the firing step becomes larger, and thus the alumina honeycomb structural body is easily fractured during the firing step. Further, an excess plasticity for the extrusion operation is provided, and a shape retaining property for the extrusion operation becomes worse. If the honeycomb structural body having worse dimensional accuracy is used, a gap occurs between the honeycomb structural bodies when they are stacked or combined, and the heated exhaust gas and the air for firing are not used for heat-exchanging and pass by a side wall of the honeycomb structural body. Therefore, a thermal shock occurs and the honeycomb structural body is easily fractured. Further, if a firing temperature is set to not less than 1500°C preferably not less than 1575°C, it is possible to obtain preferable porosity and crystal phase, and thus this firing temperature range is preferable.

As a preferable embodiment of the first aspect of the alumina honeycomb structural body, a porosity is not greater than 50 %, preferably not greater than 15 %, a thermal expansion coefficient is not greater than 8.5×10⁻⁶/°C, and a main crystal phase is α alumina, and, an amount of impurities is not greater than 1 weight %. In both cases, it is possible to increase effectively a corrosion resistance effect according to the invention. As a means for densifying the alumina honeycomb structural body, thereby increasing a corrosion resistance performance, it is general to add yttrium oxide and perform the firing under a non-oxidizing atmosphere at a high temperature. However, yttrium oxide is expensive and a manufacturing cost is also expensive since the firing under a non-oxidizing atmosphere is performed. Therefore, the addition of yttrium oxide is not adequate to the case wherein a large number of the honeycomb structural bodies are used as the regenerator. This invention is effective, because the alumina honeycomb structural body is inexpensive and shows an excellent corrosion resistance performance.

Moreover, as a preferable embodiment utilizing the first aspect of the honeycomb regenerator, at least one pair of honeycomb regenerators mentioned above, wherein one honeycomb regenerator stores heat while the other honeycomb regenerator discharges heat, and a heat-exchanging operation is performed by switching each other. In this embodiment, it is possible to eliminate the problem of short life due to a deterioration (hole plugging, fracture) of the honeycomb regenerator originated from corrosion effectively, particularly in the used at a temperature over 1000°C, and thus it is possible to reduce the running cost.

Further, it is preferable to construct the heating furnace and the steel heating furnace by using the switching regenerative burner mentioned above. In the case of constructing the heating furnace, it is possible to prevent an increase of total cost due to a deterioration of the honeycomb regenerator and also prevent an increase of manufacturing cost of the substances to be heated, effectively. In the case of constructing the steel heating furnace, it is possible to eliminate the problem such that the honeycomb regenerator is easily deteriorated since iron series elements are unavoidably included in the exhaust gas of the steel heating furnace, in addition to prevent the increase of total cost and the increase of manufacturing cost as is the same as the heating furnace. Moreover, since a life of the honeycomb regenerator can be prolonged, it is possible to elongate a furnace stop cycle.

According to a second aspect of the invention of an alumina honeycomb structural body, the alumina honeycomb structural body comprises: not less than 98 weight % of alumina as a main ingredient; a Na containing compound having 0.02 weight % - 1.0 weight % of Na₂O when converting it into oxide; and remainder of impurities. Moreover, according to a second aspect of the invention of a method of manufacturing the alumina honeycomb structural body, the method comprises the step of: mixing 97 weight % - 70 weight % of α alumina, 3 weight % - 30 weight % of aluminum hydroxide, necessary amount of sodium source, forming agents, and solvents to obtain a plastic substance; extruding the plastic substance to obtain an extruded honeycomb body; and firing the extruded honeycomb body to obtain an alumina honeycomb structural body having α alumina as a main crystal phase. Further, according to a second aspect of the invention of a honeycomb regenerator, the honeycomb regenerator comprises: at least one alumina honeycomb structural body including Na mentioned above, wherein a heating gas and a gas to be heated are alternately passed therein so as to perform a heat-exchanging.

In the second aspect of the alumina honeycomb structural body and the second aspect of the honeycomb regenerator, since an amount of Na containing compound is limited to 0.02-1.0 weight % of Na2O when converting it into oxide, a part of Na, K and so on contacted as incoming substances is caught up therein, and it shows an effect for reducing a reaction with a scale and so on. Moreover, since Na₂O is included, it is possible to prevent a densifying reaction easily even if the honeycomb structural body is manufactured by a low temperature firing. If an amount of Na₂O is less than 0.02 weight %, the reaction reducing effect due to Na, K and so on does not occur, and the densifying effect during the manufacturing step does not appear. On the other hand, if an amount of Na₂O exceeds 1.0 weight %, an amount of caught up Na, K is increased and a glass substance is generated, so that the reaction to be reduced is adversely promoted. In addition, a thermal expansion coefficient becomes larger, and thus the alumina honeycomb structural body is easily fractured by a thermal shock. Further, since an amount of Al₂O₃ as a main ingredient is set to not less than 98 weight %, it is possible to promote a chemical stability of alumina. If a large amount of impurities such as SiO₂, TiO₂ and so on is included, the impurities are reacted with substances such as Na₂O, K and so on introduced from the gas and a scale and so on, so that the honeycomb structural body is fractured.

In the second aspect of the method of manufacturing the alumina honeycomb structural body, since 97 weight % - 70 weight % of α alumina and 3 weight % - 30 weight % of aluminum hydroxide are used as raw materials, it is possible to obtain the alumina honeycomb structural body having an excellent formability while maintaining high purity. Here, if an amount of α alumina exceeds 97 weight % and an amount of aluminum hydroxide is less than 3 weight %, it is difficult to obtain a formability increasing effect due to the aluminum hydroxide. Moreover, if an amount of α alumina is less than 70 weight % and an amount of aluminum hydroxide exceeds 30 weight %, a rapid shrinkage of the alumina honeycomb structural body occurs during the firing step, and thus the alumina honeycomb structural body is frequently fractured during the firing step. Further, a plasticizing due to the aluminum hydroxide becomes excess, and a complete formed body is not obtained. Sodium source is not particularly limited, and it is possible to use alumina and/or aluminum hydroxide containing high Na₂O. However, it is preferred to use sodium aluminate since it is easy to use. If a firing temperature is set to not less than 1475°C preferably not less than 1550°C, desired porosity and crystal phase can be obtained.

Moreover, as a preferable embodiment utilizing the second aspect of the honeycomb regenerator, a porosity is not greater than 50%, preferably not greater than 15%, a thermal expansion coefficient is not greater than 8.5×10⁻⁶/°C, and a main crystal phase is α alumina. In this case, an effect for increasing corrosion resistance can be exerted effectively.

Moreover, as a preferable embodiment utilizing the second aspect of the honeycomb regenerator, at least one pair of honeycomb regenerators mentioned above, wherein one honeycomb regenerator stores heat while the other honeycomb regenerator discharges heat, and a heat-exchanging operation is performed by switching each other. In this embodiment, it is possible to eliminate the problem of short life due to a deterioration (hole plugging, fracture) of the honeycomb regenerator originated from corrosion effectively, particularly in the used at a temperature over 1000°C, and thus it is possible to reduce the running cost.

Further, it is preferable to construct the heating furnace and the steel heating furnace by using the switching regenerative burner mentioned above. In the case of constructing the heating furnace, it is possible to prevent an increase of total cost due to a deterioration of the honeycomb regenerator and also prevent an increase of manufacturing cost of the substances to be heated, effectively. In the case of constructing the steel heating furnace, it is possible to eliminate the problem such that the honeycomb regenerator is easily deteriorated since iron series elements are unavoidably included in the exhaust gas of the steel heating furnace, in addition to prevent the increase of total cost and the increase of manufacturing cost, as is the same as the heating furnace. Moreover, since a life of the honeycomb regenerator can be prolonged, it is possible to elongate a furnace stop cycle.

### Brief Description of the Drawings

Fig. 1 is a schematic view showing one embodiment of an alumina honeycomb structural body according to a first or a second aspect of the invention;
Fig. 2 is a schematic view illustrating one embodiment of a honeycomb regenerator utilizing the alumina honeycomb structural body shown in Fig. 1; and
Fig. 3 is a schematic view depicting one embodiment of a switching regenerative burner utilizing the honeycomb regenerator according to the invention.

### Best Mode for Carrying Out the Invention

Hereinafter, an alumina honeycomb structural body according to a first aspect and a second aspect of the invention, a method of manufacturing the alumina honeycomb structural body, a honeycomb regenerator, a switching regenerative burner, a heating furnace and a method of heating the heating furnace will be explained.

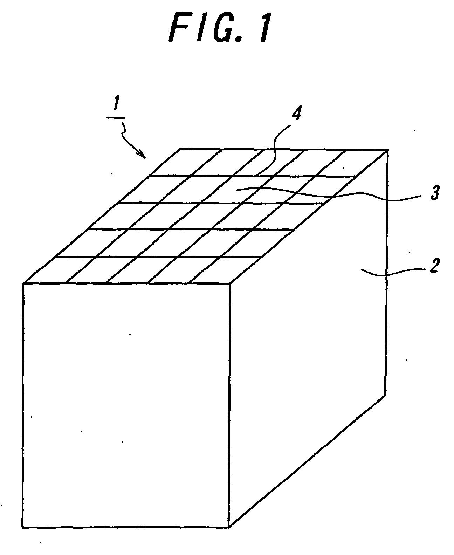

Fig. 1 is a schematic view showing one embodiment of an alumina honeycomb structural body according to a first or a second aspect of the invention. In the embodiment shown in Fig. 1, an alumina honeycomb structural body 1 is constructed in such a manner that a plurality of through holes 3 arranged in parallel with each other are formed in an outer wall 2 by means of cell walls 4. The construction of the alumina honeycomb structural body 1 mentioned above is the same as that of the known one.

An important feature of the first aspect of the alumina honeycomb structural body 1 according to the invention is the use of a ceramic consisting of not greater than 2 weight % preferably not greater than 1 weight % of impurities and alumina as a main ingredient. Moreover, as a preferable embodiment, a porosity of the alumina honeycomb structural body 1 is not greater than 50 %, preferably not greater than 15 %, a thermal expansion coefficient thereof is not greater than 8.5×10⁻⁶/°C, and a main crystal phase thereof is α alumina.

The alumina honeycomb structural body of the first aspect of the invention can be manufactured according to the following manufacturing method. At first, 97 weight % - 70 weight % of α alumina, 3 weight % - 30 weight % of aluminum hydroxide, and forming agents are prepared. In this case, an amount of impurities of these raw materials is low. Then, the thus prepared α alumina, aluminum hydroxide and forming agents are mixed with a solvent and are plasticized so as to obtain a batch. Then, the thus obtained batch is extruded by using a die so as to obtain a honeycomb structural formed body. Then, the thus obtained formed body is fired under an oxidizing atmosphere at a temperature over 1500°C preferably over 1575°C so as to obtain the alumina honeycomb structural body 1 having α alumina as a main crystal phase.

An important feature of the second aspect of the alumina honeycomb structural body 1 according to the invention is the use of a ceramic consisting of not less than 98 weight % of alumina as a main ingredient, a compound including Na having 0.02 weight % - 1.0 weight % of Na₂O when converting it into oxide, and remainder of impurities. Moreover, as a preferable embodiment, a porosity of the alumina honeycomb structural body including Na is not greater than 50 %, preferably not greater than 15 %, a thermal expansion coefficient thereof is not greater than 8.5×10⁻⁶/°C, and a main crystal phase thereof is α alumina.

The alumina honeycomb structural body of the second aspect of the invention can be manufactured according to the following manufacturing method. At first, 97 weight % - 70 weight % of α alumina, 3 weight % - 30 weight % of aluminum hydroxide, necessary amount of sodium source, and forming agents are prepared. In this case, an amount of impurities of these raw materials is low. Moreover, sodium source is not particularly limited, but it is preferred to use sodium aluminate since it is easy to use. Then, the thus prepared α alumina, aluminum hydroxide, sodium source and forming agents are mixed with a solvent and are plasticized so as to obtain a batch. Then, the thus obtained batch is extruded by using a die so as to obtain a honeycomb structural formed body. Then, the thus obtained formed body is fired under an oxidizing atmosphere at a temperature over 1475°C preferably over 1550°C so as to obtain the alumina honeycomb structural body 1 having α alumina as a main crystal phase.

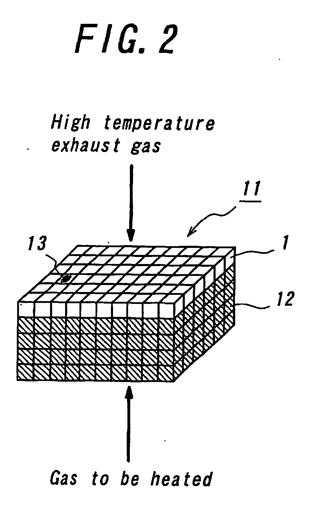

Fig. 2 is a schematic view showing one embodiment of a honeycomb regenerator according to a first aspect or a second aspect of the invention. In the embodiment shown in Fig. 2, a honeycomb regenerator 11 is formed by stacking a plurality of honeycomb structural bodies 1, 12 having a cuboid shape in such a manner that flow passages thereof constructed by through holes 13 are aligned in one direction (in this case five honeycomb structural bodies are stacked). In the embodiment shown in Fig. 2, the alumina honeycomb structural bodies 1 according to the invention mentioned above are arranged at an upper high temperature portion to which an exhaust gas is contacted, and the honeycomb structural bodies 12 made of cordierite, mullite, and so on having the same construction as that of the embodiment show in Fig. 1 are arranged at a lower low temperature portion other than the above high temperature portion.

In the honeycomb regenerator 11 shown in Fig. 2, the alumina honeycomb structural bodies 1 is used as the honeycomb structural body at the high temperature portion to which a high temperature exhaust gas is exposed. Therefore, it is possible to prevent a deterioration of the honeycomb structural body at a high temperature side even under a corrosion atmosphere, so that it is possible to achieve a long life of the honeycomb regenerator 11.

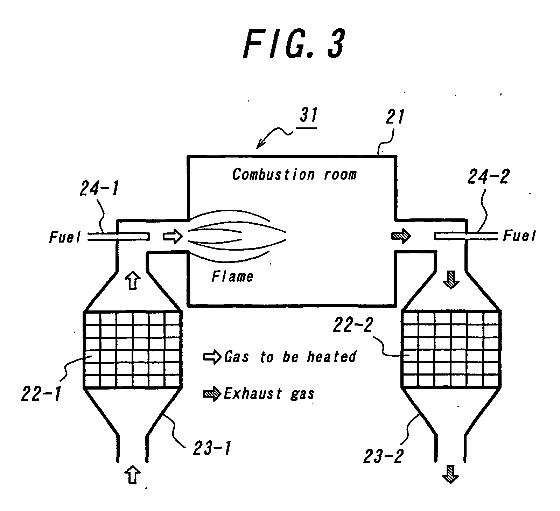

Fig. 3 is a schematic view showing one embodiment of a switching regenerative burner utilizing the honeycomb regenerator 11 according to the invention. In a switching regenerative burner 31 shown in Fig. 3, a numeral 21 is a combustion room, numerals 22-1 and 22-2 are a honeycomb regenerator having a construction shown in Fig. 2, numerals 23-1 and 23-2 are a heat exchanging apparatus constructed by the honeycomb regenerator 22-1 or 22-2, and numerals 24-1 and 24-2 are a fuel supply inlet arranged at the heat exchanging apparatus 23-1 or 23-2. In the embodiment shown in Fig. 3, two heat exchanging apparatuses 23-1 and 23-2 are arranged for the following reason. That is, when one of them stores heat by flowing the high temperature exhaust gas, the other discharges heat by flowing the gas to be heated, thereby performing the heat exchanging operation effectively. Moreover, in the case such that the switching regenerative burner is used for the heating furnace, plural pairs of burners can be utilized. In this case, it is not always necessary to apply the present invention to all the burner pairs, and, it is effective even if the present invention is applied to a part of the burner pairs to which a high temperature gas is exposed.

As a combustion room of the heating furnace, it is possible to utilize the combustion room 21 of the switching regenerative burner 31 shown in Fig. 3. In this case, when the substances are heated by using the heating furnace mentioned above, the honeycomb regenerator 11 is not deteriorated. Therefore, it is possible to reduce a total cost and a manufacturing cost of the substances to be heated. Moreover, as a combustion room of the steel heating furnace, it is possible to utilize the combustion room 21 of the switching regenerative burner 31 shown in Fig. 3. In this case, when the steel is heated by using the steel heating furnace mentioned above, it is possible to prevent a deterioration of the honeycomb regenerator 11 even under a condition such that the iron series elements are unavoidably included in the exhaust gas, in addition to the effects for reducing the total cost and the manufacturing cost as is the same as the heating furnace mentioned above.

Hereinafter, actual experiments of the alumina honeycomb structural body according to the first aspect and the second aspect of the invention will be explained.

### Experiment 1 (alumina honeycomb structural body according to the first aspect of the invention)

At first, as α alumina raw materials and aluminum hydroxide raw materials, α alumina A, α alumina B, α alumina C and α alumina D, each having a different impurity amount as shown in the following Table 1, were prepared, and aluminum hydroxide A, aluminum hydroxide B and aluminum hydroxide C, each having a different impurity amount as shown in the following Table 1, were also prepared. Here, the impurity amount is indicated by a value obtained by converting it into oxide, and it is calculated in such a manner that ignition loss (Ig-Loss) and Al₂O₃ amount is subtracted from the total amount.

**Table 1**

| Name of raw materials | Impurity amount (wt%) |
|---|---|
| α alumina A | 1.0 |
| α alumina B | 1.5 |
| α alumina C | 2.3 |
| α alumina D | 4.5 |
| Aluminum hydroxide A | 1.0 |
| Aluminum hydroxide B | 4.8 |
| Aluminum hydroxide C | 7.5 |

Then, the thus prepared various α alumina raw materials and aluminum hydroxide raw materials were mixed at mixing rates shown in the following Table 2 and were further mixed with methyl cellulose and water for plasticizing so as to obtain various batches. The thus obtained batches were extruded and then fired under an oxidizing atmosphere so as to obtain honeycomb formed bodies each having a condition such that a wall thickness is 0.43 mm and the number of cells is 15.5 cell/cm². The thus obtained honeycomb formed bodies were dried and then fired at firing temperatures shown in the following Table 2 so as to obtain alumina honeycomb structural bodies of sample Nos. T1 - T16 according to the examples of the invention and the comparative examples. Formability during the manufacturing was examined, and alumina purity (impurity density), porosity and thermal expansion coefficient (CTE) were measured with respect to the thus obtained alumina honeycomb structural bodies. Moreover, the regenerator for heat-exchanging was manufactured by combining the alumina honeycomb structural bodies, and an actual endurance test was performed in the steel heating furnace. Then, an appearance and a dimension of the regenerator after one year were measured, and a deterioration rate was investigated. The results are shown in the following Table 2.

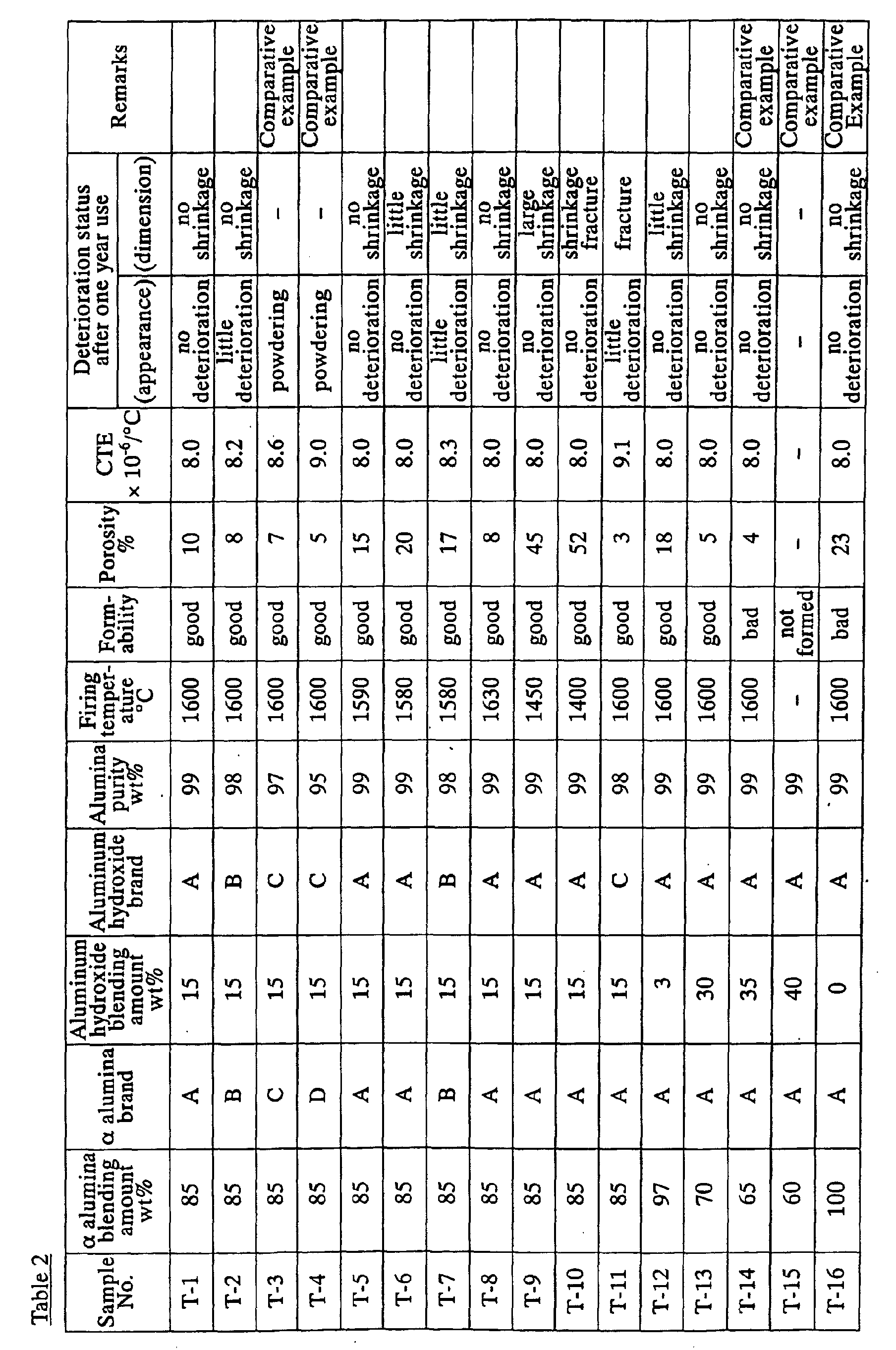

From the results shown in Table 2, in the alumina honeycomb structural body in which an amount of impurities is not greater than 2 weight % i.e. an alumina purity exceeds 98 weight %, it is understood that there is no fatal damage on the appearance and the dimension. Moreover, among the examples according to the invention in which an amount of impurities is not greater than 2 weight %, in the examples shown by the sample Nos. T14 - T16 in which a blending amount of α alumina is not 97 weight % - 70 weight % and a blending amount of aluminum hydroxide is not 3 weight % - 30 weight %, it is understood that there is no deterioration but the formability becomes worse. Further, if raw materials containing a comparatively large amount of impurities as α alumina raw material and/or aluminum hydroxide raw material are used, it is understood that an alumina purity of the alumina honeycomb structural body manufactured in the manner mentioned above cannot be controlled in the range required by the present invention.

### Experiment 2 (alumina honeycomb structural body according to the second aspect of the invention)

At first, as α alumina raw materials, aluminum hydroxide raw materials and sodium source, α alumina A - E each having Al₂O₃ amount and Na₂O amount (as shown in the following Table 3), aluminum hydroxide A - D each having Al₂O₃ amount and Na₂O amount (as shown in the following Table 4) and sodium aluminate A having Al₂O₃ amount and Na₂O amount (as shown in the following Table 5) were prepared.

**Table 3**

| Alumina brand | Al₂O₃ amount (weight %) | Na₂O amount (weight %) |
|---|---|---|
| α alumina A | 99.1 | 0.02 |
| α alumina B | 99.3 | 0.20 |
| α alumina C | 98.3 | 0.02 |
| α alumina D | 98.9 | 0.20 |
| α alumina E | 99.3 | <0.01 |

**Table 4**

| Aluminum hydroxide brand | Al₂O₃ amount (weight %) | Na₂O amount (weight %) |
|---|---|---|
| Aluminum hydroxide A | 99.1 | 0.02 |
| Aluminum hydroxide B | 99.4 | 0.20 |
| Aluminum hydroxide C | 97.2 | 0.02 |
| Aluminum hydroxide D | 98.5 | 0.20 |

**Table 5**

| Sodium source | Al₂O₃ amount (weight %) | Na₂O amount (weight %) |
|---|---|---|
| Sodium aluminate A | 69.2 | 29.5 |

Then, the thus prepared α alumina raw materials, aluminum hydroxide raw materials and sodium source were mixed at mixing rates shown in the following Table 6 for plasticizing so as to obtain various batches. The thus obtained batches were extruded so as to obtain honeycomb formed bodies each having a condition such that a wall thickness is 0.43 mm and the number of cells is 15.5 cell/cm². The thus obtained honeycomb formed bodies were dried and then fired at firing temperatures shown in the following Table 6 so as to obtain alumina honeycomb structural bodies containing Na of sample Nos. 1 - 15 according to the examples of the invention and the comparative examples. Formability during the manufacturing was examined, and alumina purity (impurity density), porosity and thermal expansion coefficient (CTE) were measured with respect to the thus obtained alumina honeycomb structural bodies. Moreover, the regenerator for heat-exchanging was manufactured by combining the alumina honeycomb structural bodies, and an actual endurance test was performed in the steel heating furnace. Then, an appearance and a dimension of the regenerator after one year were measured, and a deterioration rate was investigated. The results are shown in the following Table 6. In Table 6, Al₂O₃ purity (amount) and Na₂O amount as mixtures are also shown.

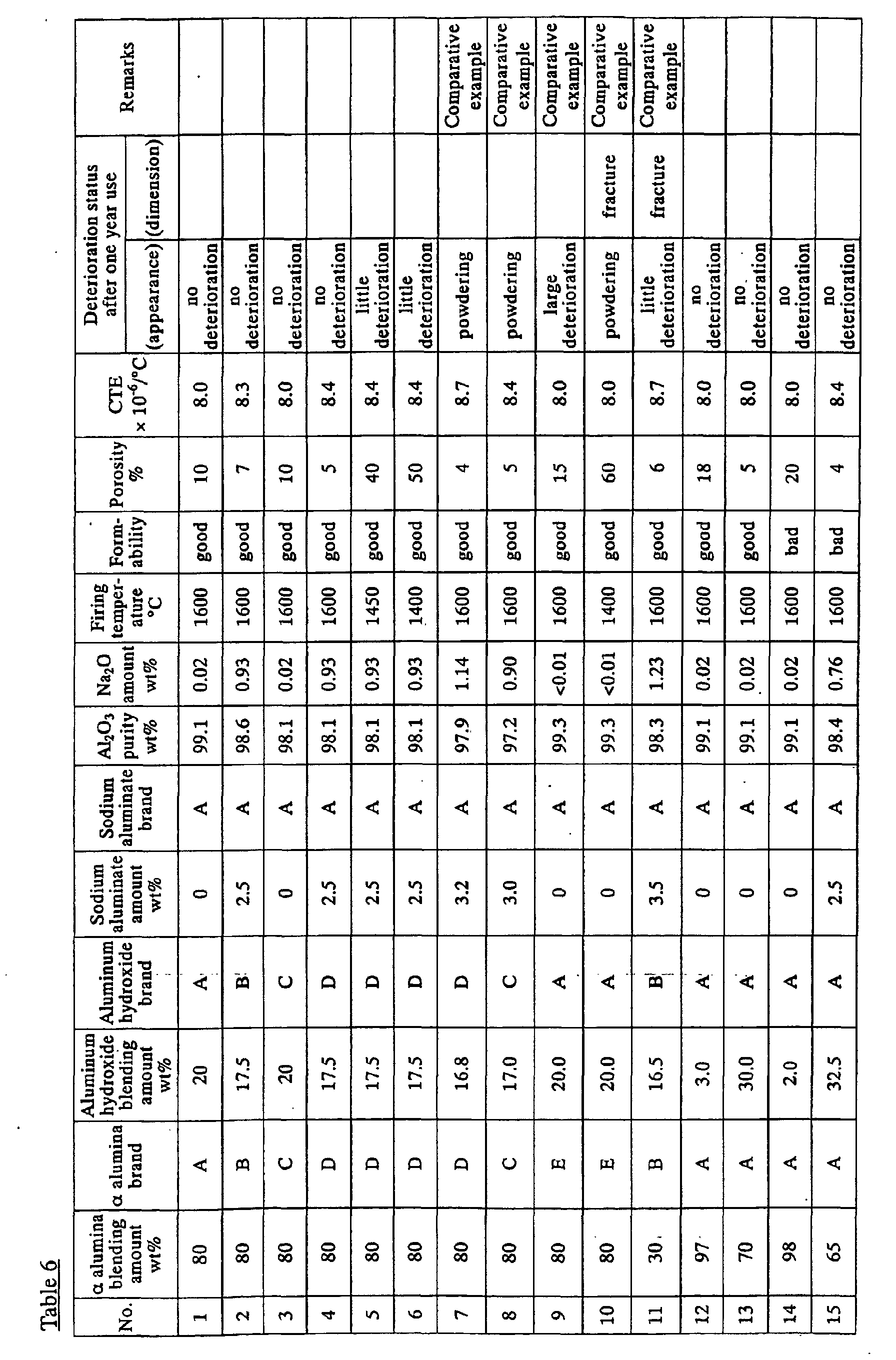

From the results shown in Table 6, it is understood that, in the examples in which an amount of Al₂O₃ is not less than 98 weight % and an amount of Na₂O is 0.02 -1.0 weight %, there is no deterioration on the appearance and the dimension, and, even if deteriorated, a deterioration rate is very small and it is no problem. On the other hand, in the cases that an amount of Al₂O₃ is less than 98 weight % or an amount of Na₂O is less than 0.02 weight % or exceeds 1.0 weight %, impurities such as sodium and so on in the alumina honeycomb structural body is reacted with the scale, and the alumina honeycomb structural body is apparently deteriorated after one year endurance test.

Moreover, among the examples according to the invention, in the examples shown by the sample Nos. 14 - 15 in which a blending amount of α alumina is 97 weight % - 70 weight % and a blending amount of aluminum hydroxide is 3 weight % - 30 weight %, it is understood that there is no deterioration but the formability becomes worse since the batch is plasticized excessively.

### Industrial Applicability

As is clearly understood from the above explanations, according to the first aspect of the alumina honeycomb structural body and the first aspect of the honeycomb regenerator, since an amount of impurities is limited to not greater than 2 weight %, a scale of steel does not react with the impurities in the alumina honeycomb structural body so much and a life of the regenerator can be prolonged, even if the regenerator is used in the steel heating furnace. Moreover, in the first aspect of the method of manufacturing the alumina honeycomb structural body, since use is made of 97 weight % - 70 weight % of α alumina and 3 weight % - 30 weight % of aluminum hydroxide as raw materials, it is possible to obtain the alumina honeycomb structural body having an excellent formability while maintaining high purity.

Moreover, according to the second aspect of the alumina honeycomb structural body and the second aspect of the honeycomb regenerator, since an amount of alumina as main ingredient is limited to not less than 98 weight % and an amount of Na₂O is limited to 0.02 - 1.0 weight %, even in the regenerator used in the steel heating furnace, a reaction of impurities in the alumina honeycomb structural body due to the scale of steel is little, and a life of the regenerator can be prolonged. Further, since an amount of Na₂O is limited to 0.02 weight % - 1.0 weight %, Na, K and so on in the gas are caught up and a reaction is reduced, so that a life is prolonged. Furthermore, it is possible to make the body dense even if a low temperature firing is performed during the manufacturing step, make porosity small and improve a durability against foreign substances.

## Claims

1. An alumina honeycomb structural body, comprising: alumina as a main ingredient and not greater than 2 weight % of impurities.

2. The alumina honeycomb structural body according to claim 1, wherein a porosity is not greater than 50 %, preferably not greater than 15 %, a thermal expansion coefficient is not greater than 8.5×10⁻⁶/°C, and a main crystal phase is α alumina.

3. The alumina honeycomb structural body according to claim 1, wherein an amount of impurities is not greater than 1 weight %.

4. A method of manufacturing an alumina honeycomb structural body, comprising the step of: mixing 97 weight % - 70 weight % of α alumina, 3 weight % - 30 weight % of aluminum hydroxide, forming agents, and solvents to obtain a plastic substance; extruding the plastic substance to obtain an extruded honeycomb body; and firing the extruded honeycomb body to obtain an alumina honeycomb structural body having α alumina as a main crystal phase.

5. An alumina honeycomb structural body, comprising: not less than 98 weight % of alumina as a main ingredient; a Na containing compound having 0.02 weight % - 1.0 weight % of Na₂O when converting it into oxide; and remainder of impurities.

6. The alumina honeycomb structural body according to claim 5, wherein a porosity is not greater than 50 %, preferably not greater than 15 %, a thermal expansion coefficient is not greater than 8.5×10⁻⁶/°C, and a main crystal phase is α alumina.

7. A method of manufacturing an alumina honeycomb structural body containing Na, comprising the steps of: mixing 97 weight % - 70 weight % of α alumina, 3 weight % - 30 weight % of aluminum hydroxide, necessary amount of sodium source, forming agents, and solvents to obtain a plastic substance; extruding the plastic substance to obtain an extruded honeycomb body; and firing the extruded honeycomb body to obtain an alumina honeycomb structural body having α alumina as a main crystal phase.

8. A honeycomb regenerator, comprising: at least one alumina honeycomb structural body set forth in claim 1 or 5, wherein a heating gas and a gas to be heated are alternately passed therein so as to perform a heat-exchanging.

9. A switching regenerative burner, comprising: at least one pair of honeycomb regenerators set forth in claim 8, wherein one honeycomb regenerator stores heat while the other honeycomb regenerator discharges heat, and a heat-exchanging operation is performed by switching each other.

10. A heating furnace, comprising: the switching regenerative burner set forth in claim 9.

11. A method of heating a substance to be heated, comprising the step of: heating the substance by using the heating furnace set forth in claim 10.

12. A steel heating furnace, comprising: the switching regenerative burner set forth in claim 9.

13. A method of heating a steel, comprising the step of: heating the steel by using the steel heating furnace set forth in claim 12.
